# EUROPÄISCHE PATENTSCHRIFT

(11) **EP 1 533 178 B1**
(45) Veröffentlichungstag und Bekanntmachung des Hinweises auf die Patenterteilung: **03.02.2010**
(21) Anmeldenummer: 04025146.4
(22) Anmeldetag: 22.10.2004
(51) Int. Cl.: B60P 1/44

(54) **Bedieneinrichtung für insbesondere eine Hubladebühne**
Control panel for loading platform
Dispositif de commande pour l' hayon élévateur

(30) Priorität: 19.11.2003 DE 20317896 U
(43) Veröffentlichungstag der Anmeldung: 25.05.2005
(73) Patentinhaber: MBB Palfinger GmbH, 27777 Ganderkesee (DE)
(72) Erfinder: Bley, Hubert, 49681 Garrel (DE); Zimmermann, Martin, 27711 Osterholz-Scharmbeck (DE)
(74) Vertreter: Möller, Friedrich

(56) Entgegenhaltungen:
- EP-A1- 0 101 865
- EP-A1- 0 592 795
- EP-A1- 0 773 136
- EP-A1- 1 123 835
- DE-A1- 4 446 883
- DE-A1- 10 139 735
- DE-C- 905 310
- DE-U1- 29 616 262

## Beschreibung

Die Erfindung betrifft eine Bedieneinrichtung für eine Hubladebühne an Fahrzeugen gemäß dem Oberbegriff des Anspruchs 1.

Hubladebühnen dienen dazu, das Be- und Entladen von Fahrzeugen mit insbesondere schweren Gegenständen zu erleichtern. Hubladebühnen verfügen über eine vorzugsweise an der Rückseite eines Fahrzeugaufbaus mindestens heb- und senkbar, vorzugsweise auch schwenkbar, angelenkte Ladeplattform.

Das Heben, Senken und Verschwenken der Ladeplattform wird von einer Bedienungsperson mittels einer Bedieneinrichtung gesteuert. Die Bedieneinrichtung kann außerdem zur Steuerung anderer Funktionen dienen, die mit der Hubladebühne zusammenhängen, beispielsweise zum Ein- und Ausfahren von Stützen. Sicherheitsvorschriften erfordern es, dass eine sogenannte Zweihandbedienung erfolgt. Dazu muss die Bedienungsperson mit beiden Händen jeweils ein Bedienorgan der Bedieneinrichtung betätigen, damit die Ladeplattform der Hubladebühne die gewünschte Bewegung ausführt.

Aus der EP-A-1 123 835 ist eine Bedieneinrichtung für eine Hubladebühne bekannt, die zur Zweihandbedienung ausgebildet ist. Die Bedieneinrichtung verfügt über ein kastenförmiges Gehäuse, das an gegenüberliegenden Stirnseiten Bedienfelder mit Bedienorganen aufweist. Weil die Stirnseiten parallel zueinander verlaufen, sind die Bedienfelder und die darauf angeordneten Bedienorgane von der Bedienungsperson schlecht einsehbar. Es hat sich gezeigt, dass die Bedienungsperson bei dieser Art der Anordnung der Bedienorgane Schwierigkeiten hat, diejenigen beiden Bedienorgane gleichzeitig zu betätigen, die zur gewünschten Bewegung der Ladeplattform führen. Vor allem kann es zu ungewollten Fehlbedienungen kommen, weil nicht die beide richtigen Bedienorgane betätigt werden. Solche Fehlbedienungen können zu Schäden an insbesondere auf der Ladeplattform sich befindenden Gütern und gegebenenfalls auch Unfällen führen.

Aus der EP-A-0 592 795 ist ein Hängetaster für Hebezeuge bekannt. Dieser Hängetaster ist zur Einhandbedienung ausgebildet. Dazu verfügt der bekannte Hängetaster über ein abgewinkeltes Gehäuse, dessen Vorderseite zwei aneinander angrenzende Bedienfelder aufweist, die etwa V-förmig zueinander verlaufen. Weil dieser bekannte Hängetaster nicht zur Zweihandbedienung ausgebildet ist, können seine Bedienfelder zusammenhängend auf der Vorderseite des Gehäuses angeordnet sein, wobei infolge der zusammenhängenden Bedienfelder die Bedienorgane auf den benachbarten Bedienfeldern dicht beieinander liegen. Wegen der Bedienfelder auf der Vorderseite des Gehäuses brauchen keine Maßnahmen ergriffen zu werden, um die Bedienfelder mit den Bedienorganen für die Bedienungsperson gut einsehbar und ergonomisch günstig betätigbar zu machen.

Der Erfindung liegt die Aufgabe zugrunde, eine Bedieneinrichtung für insbesondere Hubladebühnen an Fahrzeugen zu schaffen, die eine einfache Zweihandbedienung zulässt.

Eine Bedieneinrichtung zur Lösung dieser Aufgabe weist die Merkmale des Anspruchs 1 auf. Dadurch, dass mehrere voneinander getrennte Bedienfelder gegenüberliegenden Stirnseiten des Gehäuses zugeordnet sind und die Anordnung der Bedienfelder in unterschiedlichen Richtungen, also in verschiedenen Ebenen, gegensinnig geneigt zur Bedienungsperson konvergierend erfolgt, lassen sich die für die Zweihandbedienung erforderlichen Bedienorgane auf die unterschiedlichen Bedienfelder verteilen. Die Bedienungsperson braucht also nur auf jedem Bedienfeld ein Bedienorgan zu betätigen, wodurch Verwechslungen zuverlässig ausgeschlossen sind. Durch die Anordnung der Bedienfelder in unterschiedlichen Lagen, also unterschiedlichen Ebenen, sind die Bedienorgane ergonomisch günstig von der linken und von der rechten Hand der Bedienungsperson zugänglich.

Die erfindungsgemäß voneinander getrennten Bedienfelder sind vorzugsweise durch eine zwischen den Bedienfeldern angeordnete Wandung des Gehäuses der Bedieneinrichtung, auf der vorzugsweise auch Benutzerinformationen angebracht sind, getrennt. Dadurch befinden sich im Fall der doppelt vorhandenen Bedienorgane diese nicht nur in voneinander abweichenden Relativlagen; sie sind auch räumlich voneinander getrennt, indem beispielsweise die Bedienorgane für die linke Hand und der linken Seite und die gleiche Funktion aufweisende Bedienorgane für die rechte Hand auf der rechten Seite angeordnet sind. Durch die zwischen den Bedienfeldern vorhandene Wandung sind die Bedienfelder auch ausreichend weit voneinander beabstandet, um eine unzulässige Einhandbedienung der beiden Bedienorgane für die gleiche Funktion zu vermeiden.

Bei einer bevorzugten Ausgestaltung der Erfindung ist jedes Bedienfeld als eine ebene Bedienfläche ausgebildet, wobei die Bedienflächen sich in unterschiedlichen Ebenen befinden, vorzugsweise annähernd parallel zueinander verlaufen. Auf diesen Bedienflächen lassen sich jeweils mehrere Bedienorgane übersichtlich anordnen, beispielsweise in einer Reihe mehrerer übereinanderliegender Bedienorgane. Dadurch wird eine besonders ergonomische Zweihandbedienung der Hubladebühne gewährleistet.

Das kastenartige Gehäuse weist bei einer bevorzugten Ausgestaltung der Bedieneinrichtung mindestens einen Hohlraum auf. Im Hohlraum des Gehäuses sind elektrische Anschlüsse, Anschlussleitungen und/oder mindestens Teile der Bedienorgane unterbringbar.

Bei üblicherweise seitlich im hinteren Bereich unter dem Aufbau des Fahrzeugs angeordneter Bedieneinrichtung verlaufen die Bedienfelder bzw. Bedienflächen etwa quer zur Längsrichtung des Fahrzeugs, vorzugsweise leicht geneigt gegenüber zwei parallelen, senkrechten Ebenen durch die Längsachse des Fahrzeugs. Die seitlich neben dem Fahrzeug mit Blickrichtung auf die Fahrzeugseite stehende Bedienungsperson kann dadurch mit beiden Händen von gegenüberliegenden Seiten die Bedienorgane auf den getrennten Bedienfeldern ergreifen.

Eine Weiterbildung der Bedieneinrichtung sieht es vor, dass mindestens einige, vorzugsweise alle, Bedienorgane und/oder Bedienfelder beleuchtbar sind. Dadurch wird die Bedienungsperson auch im Dunkeln vom Licht zielgerichtet zu den Bedienorganen geführt.

Es sind verschiedene Möglichkeiten der Beleuchtung der Bedienorgane und/oder der Bedienfelder denkbar. Vorzugsweise sind die Bedienorgane indirekt beleuchtet, indem eine Hintergrundbeleuchtung von mindestens Teilen der Bedienfelder erfolgt. Durch die Hintergrundbeleuchtung der Bedienfelder wird das Umfeld der Bedienorgane beleuchtet. Die Folge ist eine blendfreie indirekte Beleuchtung der Bedienorgane. Die Bedienorgane selbst brauchen dann nicht beleuchtet zu sein.

Gemäß einer bevorzugten Weiterbildung der Bedieneinrichtung ist auch die sich zwischen den Bedienfeldern befindliche Wandung des Gehäuses beleuchtbar, und zwar vorzugsweise vom Inneren des Gehäuses her. Dazu ist die Wandung mindestens teilweise durchscheinend ausgebildet, so dass die von der Bedienungsperson sichtbare Vorderseite der Wandung mindestens zum Teil leuchtet bzw. erhellt wird. Falls vom auf der Wandung eine oder auch mehrere Benutzerinformationen aufgebracht sind, werden diese von der beleuchteten Wandung von der Bedienungsperson auch im Dunkeln sichtbar. Vorzugsweise ist die Benutzerinformation als durchsichtige Folie mit kontrastreicher, beispielsweise schwarzer Schrift und/oder Abbildungen versehen. Dadurch wird die Benutzerinformation in den die Schrift oder die Abbildung umgebenden Bereichen erhellt.

Gemäß einer bevorzugten Ausgestaltung der Bedieneinrichtung ist die Abdeckung insbesondere der Bedienfelder mit den Bedienorganen visierartig verschwenkbar ausgebildet. Die Abdeckung ist in eine Schließstellung schwenkbar, in der die Bedienfelder und die Bedienorgane von der Abdeckung überdeckt sind. In einer Öffnungsstellung gibt die Abdeckung mindestens die Bedienfelder mit den Bedienorganen frei. Durch einfaches Verschwenken der vorzugsweise in der Öffnungsstellung über und teilweise hinter dem Gehäuse liegenden Abdeckung lässt sich diese von der die Bedienung der Bedienorgane nicht störenden Öffnungsstellung leicht in eine Schließstellung über die Vorderseite des Gehäuses mit den Bedienfeldern und den Bedienorganen schwenken. Verschwenkbar ist die Abdeckung um eine (gedachte) Drehachse, die parallel zur Längsrichtung des Fahrzeugs sich durch das Gehäuse erstreckt. Auf diese Weise lässt sich die Abdeckung leicht verschwenkbar dem Gehäuse zuordnen, und zwar so, dass in der Öffnungsstellung die Abdeckung ohne irgendwelche Verschlüsse oder Arretierungen zuverlässig verbleibt.

Bei einer bevorzugten Weiterbildung der Bedieneinrichtung ist der Schwerpunkt der Abdeckung mit einer besonderen Relativanordnung zur Drehachse versehen. Dieses geschieht derart, dass bei geringem Verschwenken der Abdeckung in die Schließstellung die Abdeckung eine Schwerpunktlage relativ zur Drehachse einnimmt, dass die Abdeckung im Übrigen selbst vollständig in die Schließstellung gelangt. Dabei ist ein automatisches Schließen der Abdeckung durch Erschütterungen während der Fahrt des Fahrzeugs gewährleistet, falls es die Bedienungsperson vor Fahrtantritt versäumt hat, die Abdeckung in die Schließstellung herunterzuschwenken. Um dieses selbsttätige Schließen der Abdeckung zu Beginn der Fahrt sicherzustellen, ist bei der bevorzugten Ausgestaltung der Bedieneinrichtung vorgesehen, die Abdeckung mit mindestens einem Beschwerungsmittel zu versehen, das den Schwerpunkt der vollständig geöffneten Abdeckung nahezu senkrecht über die Drehachse oder geringfügig hinter die Drehachse bringt, damit durch diese gezielte Schwerpunktsverlagerung die Abdeckung zuverlässig selbsttätig in die Schließstellung gelangt, sobald sich das Fahrzeug in Bewegung setzt und dabei schüttelnde Bewegungen auf die Bedieneinrichtung ausgeübt werden, die dazu führen, dass der über oder leicht hinter der Drehachse liegende Schwerpunkt der Abdeckung über die Drehachse nach vom wandert und damit schwerkraftbedingt die Abdeckung vollständig in die Schließstellung gelangt, und zwar selbsttätig.

Weitere Unteransprüche betreffen weitere Ausgestaltungen der erfindungsgemäßen Bedieneinrichtung.

Ein bevorzugtes Ausführungsbeispiel der Bedieneinrichtung wird nachfolgend anhand der Zeichnung näher erläutert. In dieser zeigen:
- Fig. 1: eine perspektivische Darstellung der Bedieneinrichtung mit sich in einer Öffnungsstellung befindlicher Abdeckung,
- Fig. 2: die Bedieneinrichtung der Fig. 1 (mit offener Abdeckung) in einer Ansicht von vorn,
- Fig. 3: die Bedieneinrichtung der Fig. 1 und 2 (mit offener Abdeckung) in einer Ansicht von der Seite,
- Fig. 4: die Bedieneinrichtung in einer Ansicht analog zur Fig. 3 bei sich in der Schließstellung befindlicher Abdeckung, und
- Fig. 5: die Bedieneinrichtung der Fig. 4 (mit geschlossener Abdeckung) in einer Ansicht von vorn, die der Blickrichtung einer Bedienungsperson auf die Bedieneinrichtung entspricht.

Die hier gezeigte Bedieneinrichtung 10 dient zum Betätigen einer in den Figuren nicht dargestellten Hubladebühne am Heck eines Fahrzeugs, insbesondere eines Kraftfahrzeugs. Die Hubladebühne verfügt neben der Bedieneinrichtung 10 über eine Ladeplattform und ein Hubwerk, welches die Ladeplattform auch mit einem Fahrgestell des Fahrzeugs verbindet. Die Hubladebühne ist derart der Rückseite des Fahrzeugs zugeordnet, dass die Ladeplattform während der Fahrt des Fahrzeugs gegen die Rückseite eines Aufbaus, vorzugsweise eines Kofferaufbaus, des Fahrzeugs geschwenkt ist. Das Hubwerk verfügt vorzugsweise über Hydraulikzylinder, die die Ladeplattform sowohl verschwenken als auch anheben und absenken können. Gegebenenfalls kann die Hubladebühne noch weitere Funktionen aufweisen, die von der Bedieneinheit 10 zu steuern sind.

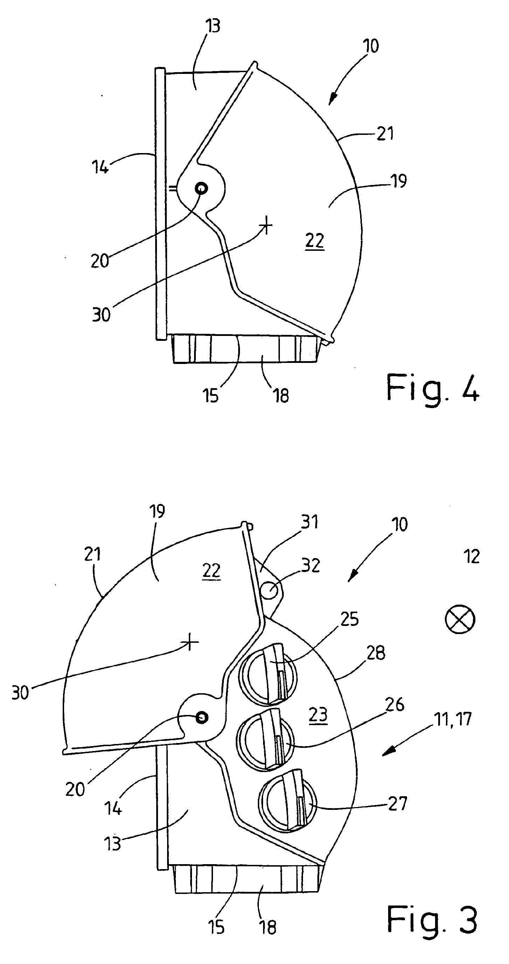

Die Bedieneinheit 10 ist an einer Seite des Fahrzeugs, üblicherweise in Staaten mit Rechtsverkehr an der rechten Seite, angeordnet, und zwar im Heckbereich unter dem Fahrzeugaufbau. Zur Bedienung der Hubladebühne steht eine Bedienungsperson seitlich neben dem Fahrzeug vor einer Vorderseite 17 der Bedienungseinrichtung 10, wobei die Vorderseite 17 gleichzeitig die Bedienerseite 11 ist. In der Fig. 3 ist symbolisch durch einen Kreis mit einem Kreuz die Bedienungsperson 12 vor der Bedieneinrichtung 10 dargestellt. Die Bedieneinrichtung 10 weist ein Basisteil auf, das im gezeigten Ausführungsbeispiel als ein geschlossenes kastenartiges Gehäuse 13 ausgebildet ist. Im Gehäuse 13 ist mindestens ein Hohlraum angeordnet, in dem nicht gezeigte Teile von Bedienorganen, Anschlüsse und Anschlussleitungen derselben untergebracht sind. Gegebenenfalls können im Inneren des Gehäuses 13 auch eine Steuerung oder Teile der Steuerung der Hubladebühne untergebracht sein. Das Gehäuse 13 verfügt über eine ebene Rückseite 14, eine rechtwinklig dazu verlaufende, ebene Unterseite 15, zwei gegenüberliegende Stirnseiten 16 und die im vorliegenden Ausführungsbeispiel gewölbte Vorderseite 17. An der Unterseite 15 ist an das Gehäuse 13 einstückig angeformt ein ebener, horizontaler Schraubsockel 18, womit die Bedieneinrichtung 10 an einer entsprechenden Traverse insbesondere des Fahrgestells des Fahrzeugs festschraubbar ist. Es ist aber auch denkbar, den Schraubsockel 18 der Rückseite 14 des Gehäuses 13 zuzuordnen.

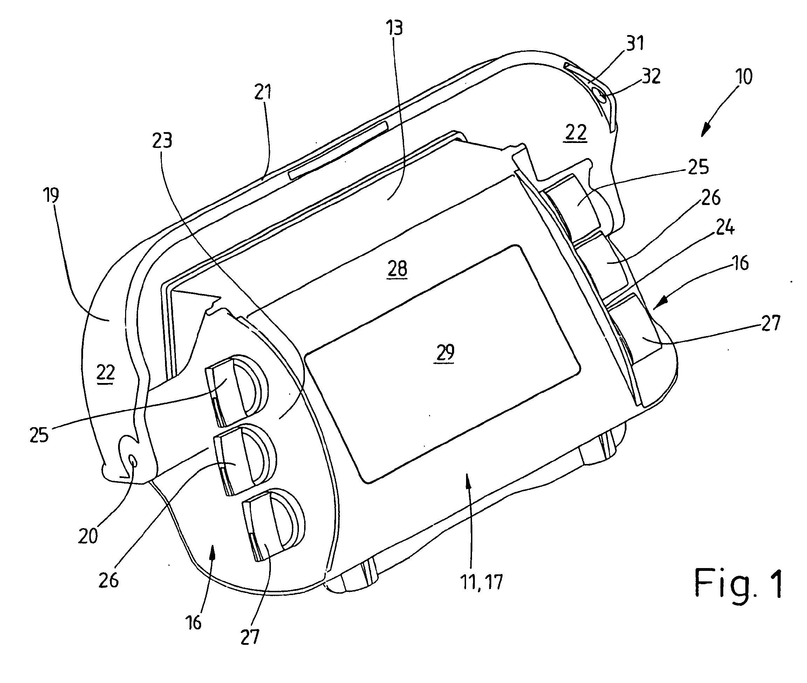

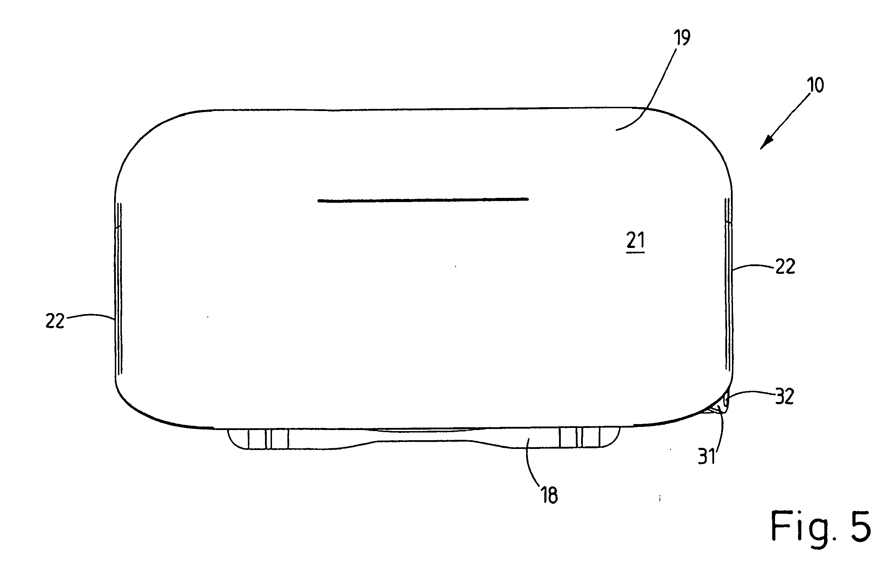

Die Bedieneinrichtung 10 weist des Weiteren eine dem Gehäuse zugeordnete Abdeckung 19 auf. Die Abdeckung 19 ist nach Art eines Helmvisiers um eine Drehachse 20 schwenkbar am Gehäuse 13 gelagert. Die Drehachse 20 liegt auf einer gedachten, horizontalen Linie, die sich durch den hinteren Bereich des Gehäuses erstreckt und parallel zur horizontalen Längsachse des Fahrzeugs verläuft. Die Abdeckung 19 verfügt über eine nach Art eines viertelkreisigen Zylinderabschnitts ausgebildete Mantelfläche 21 und zwei gegenüberliegende etwa viertelkreisige Stirnflächen 22, die einstückig an die Mantelfläche 21 angeformt sind. Die Abdeckung 19 ist um etwas über 90° verschwenkbar von einer in den Fig. 1 bis 3 gezeigten Öffnungsstellung in eine in den Fig. 4 und 5 gezeigte Schließstellung.

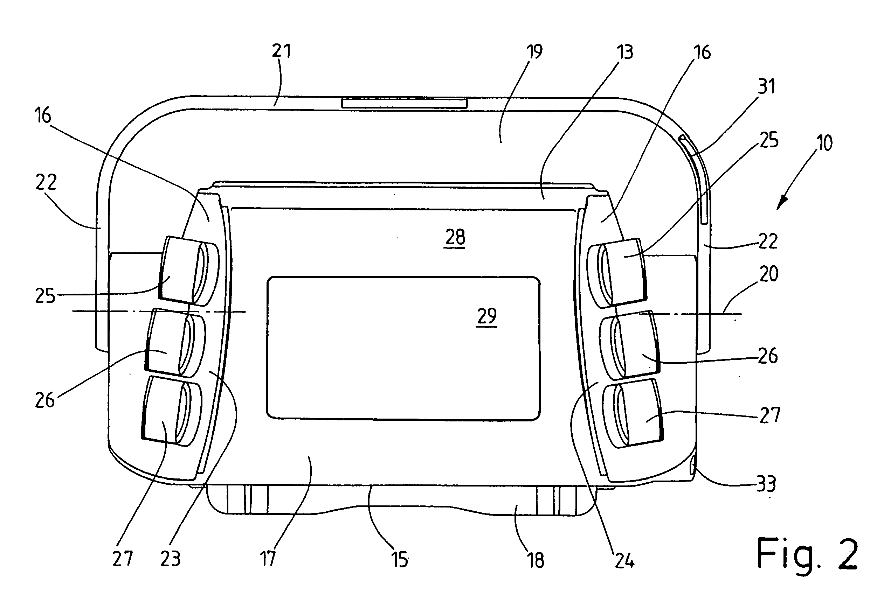

Die gezeigte Bedieneinrichtung 10 verfügt über zwei getrennte Bedienfelder. Die Bedienfelder sind gegenüberliegenden Stirnseiten 16 des Gehäuses 13 zugeordnet. Dadurch befinden sich die Bedienfelder in unterschiedlichen Ebenen. Bei der in den Figuren dargestellten Bedieneinrichtung 10 sind die Bedienfelder als Bedienflächen 23 und 24 ausgebildet. Die im Wesentlichen ebenen Bedienflächen 23 und 24 sind etwa gleich groß. Die Bedienflächen 23 und 24 bilden größtenteils die Stirnseiten 16 des Gehäuses 13. Die Bedienflächen 23 und 24 sind dadurch von gegenüberliegenden Seiten des Gehäuses 13 zugänglich, wodurch sie sich in einer ergonomisch günstigen Lage für eine Zweihandbedienung befinden. Jede Bedienfläche 23 und 24 liegt in einer unterschiedlichen Ebene. Hierbei handelt es sich um im Wesentlichen senkrechte Ebenen, die die Längsachse des Fahrzeugs quergerichtet schneidet. Bei der gezeigten Bedieneinrichtung 10 sind die Bedienflächen 23 und 24 sowohl in vertikaler als auch horizontaler Richtung leicht geneigt, und zwar gegensinnig. Die Bedienflächen 23 und 24 sind in senkrechter Richtung derart gegensinnig geneigt, dass sie nach oben hin leicht konvergierend zusammenlaufen. In horizontaler Richtung sind die Bedienflächen 23 und 24 ebenfalls gegensinnig leicht geneigt, und zwar so, dass sie in Richtung zur Bedienungsperson 12 konvergieren, also leicht zusammenlaufen (Fig. 1 und 2). Die Bedienflächen 23 und 24 können aber auch nur in einer Richtung geneigt sein.

Die Bedieneinrichtung 10 der Fig. 1 bis 3 weist insgesamt sechs Bedienorgane auf, die gleichmäßig auf die beiden Bedienflächen 23 und 24 verteilt sind, so dass sowohl der Bedienfläche 23 als auch der Bedienfläche 24 jeweils die Bedienorgane zugeordnet sind. Diese Bedienorgane sind im gezeigten Ausführungsbeispiel gleichermaßen als Drehschalter 25, 26 und 27 ausgebildet. Gegenüberliegende Drehschalter 25, 26 bzw. 27 der linken Bedienfläche 23 und der rechten Bedienfläche 24 haben jeweils gleiche Funktionen. Beispielsweise können die oberen Drehschalter 25 der Bedienfläche 23 und 24 dazu dienen, die Ladeplattform der Hubladebühne zu verschwenken. Durch gleich gerichtetes Drehen der Drehschalter 25 in die eine Richtung wird die Ladeplattform aufgeschwenkt und in die andere Richtung zugeschwenkt. Die mittleren Drehschalter 26 der Bedienfläche 23 und der Bedienfläche 24 können zum Heben und Senken der Ladeplattform dienen, wobei durch gleichgerichtetes Drehen der Drehschalter 26 nach hinten die Ladeplattform gesenkt wird und durch gleichgerichtetes Verdrehen der Drehschalter 26 nach vorn die Ladeplattform anhebbar ist. Die wiederum eine gleiche Funktion aufweisenden unteren Drehschalter 27 der Bedienflächen 23 und 24 können zur Steuerung beliebiger Sonderfunktionen der Ladeplattform dienen. Es ist auch denkbar, andere Funktionen hiermit zu steuern, beispielsweise das Ein- und Ausfahren von Stützen zur Sicherung des Fahrzeugs beim Be- und Entladen. Es ist auch denkbar, die unteren Schalter 27, die Sonderfunktionen haben, mit unterschiedlichen Funktionen zu belegen, so dass die Betätigung des unteren Drehschalters 27 der Bedienfläche 23 eine andere Bewegung auslöst als die Betätigung des unteren Drehschalters 27 der Bedienfläche 24. Denkbar ist es auch, jeder Bedienfläche 23 und 24 eine andere Anzahl an Drehschaltern oder sonstigen Bedienorganen zuzuordnen. Es kann reichen, wenn jeder Bedienfläche 23, 24 nur ein Bedienorgan oder zwei Bedienorgane zugeordnet sind. Ebenso ist es denkbar, mehr als drei Bedienorgane jeder Bedienfläche 23 und 24 zuzuordnen.

Die drei Drehschalter 25 bis 27 jeder Bedienfläche 23, 24 sind in einer Reihe übereinanderliegend angeordnet. Der obere Drehschalter 25 und der untere Drehschalter 27 jeder Bedienfläche 23 und 24 liegen auf einer gedachten Linie übereinander, die leicht schräg zur Vertikalen verläuft, und zwar so, dass der obere Drehschalter 25 etwas dichter an der Längsmittelachse des Fahrzeugs liegt. Die zwischen den oberen Drehschaltern 25 und unteren Drehschaltern 27 angeordneten (mittleren) Drehschalter 26 sind leicht gegenüber der gedachten Verbindungslinie zwischen jeweils einem Drehschalter 25 und 27 versetzt, und zwar im gezeigten Ausführungsbeispiel nach hinten, also zur Längsmittelebene des Fahrzeugs (Fig. 3). Es ist aber auch denkbar, dass die Drehschalter 25, 26 und 27 andere Relativanordnungen zueinander aufweisen. Entscheidend ist, dass alle Drehschalter 25 bis 27 der Bedienfläche 23 eine gleiche Relativanordnung wie die Drehschalter 25 bis 27 der Bedienfläche 24 aufweisen, so dass die Bedienungsperson mit ihren Händen den jeweiligen Drehschalter 25, 26 bzw. 27 quasi synchron fassen kann, weil sich die Drehschalter 25, 26 und 27 der verschiedenen Bedienflächen direkt gegenüberliegen.

Die Bedienflächen 23 und 24 an den gegenüberliegenden Stirnseiten 16 des Gehäuses 13 sind räumlich getrennt voneinander durch einen an der Vorderseite 17 des Gehäuses 13 sich befindenden Vorderwandbereich 28. Die Bedienungsperson 12 blickt, wenn sie zur Bedienung der Hubladebühne vor der Bedieneinrichtung 10 steht, auf diesen Vorderwandbereich 28. Demzufolge ist dieser Vorderwandbereich 28 mit Benutzerinformationen, beispielsweise textlichen Anweisungen oder auch Piktogrammen zur Veranschaulichung der Bedienung der Hubladebühne, versehen. Vor allem weist die in den Fig. 1 und 2 nur in den Umrissen angedeutete Benutzerinformation 29 Anweisungen über die Belegung der Funktionen der Drehschalter 25, 26 und 27 auf. Die Benutzerinformation 29 kann bei der Herstellung des Gehäuses 13 aus Kunststoff im Vorderwandbereich 28 vorstehend oder vertieft eingeformt sein. Es ist aber auch denkbar, die Benutzerinformation 29 durch ein nachträglich auf den Vorderwandbereich 28 aufgebrachte Selbstklebefolie zu bilden.

Es ist des Weiteren vorgesehen, die Drehschalter 25, 26 und 27 direkt oder indirekt zu beleuchten. Vorzugsweise erfolgt eine indirekte Beleuchtung der Drehschalter 25, 26 und 27, indem die Bedienflächen 23 und 24 beleuchtet sind. Die Beleuchtung der Bedienflächen 23 und 24 erfolgt im gezeigten Ausführungsbeispiel nach Art einer Hintergrundbeleuchtung. Zu diesem Zweck sind im Inneren des Gehäuses 13 Leuchtmittel angeordnet, die die im Gehäuse 13 liegende Innenseite der Bedienflächen 23 und 24 anstrahlen. Infolge einer durchsichtigen, teildurchsichtigen oder durchscheinenden Ausbildung der Bedienflächen 23 und 24 werden die Bedienflächen 23 und 24 in den die Drehschalter 25, 26 und 27 umgebenden Bereichen erhellt. Die Bedienschalter 25, 26 und 27 sind dann praktisch vor einem erleuchteten Hintergrund, nämlich den getrennten Bedienflächen 23 und 24, angeordnet.

Es ist denkbar, ebenso wie die Drehschalter 25, 26 und 27 auch die Benutzerinformationen 29 auf den Vorderwandbereich 28 des Gehäuses 13 indirekt zu beleuchten, indem mindestens derjenige Teil des Vorderwandbereichs 28 des Gehäuses 13 durchscheinend ausgebildet ist, über den sich die Benutzerinformation 29 erstreckt. Ist die Benutzerinformation 29 als Vertiefungen in den Vorderwandbereich 28 eingeformt, wird nur diese Vertiefung und dadurch der Text oder die Darstellung der Benutzerinformation 29 erleuchtet. Ist hingegen die Benutzerinformation 29 erhaben auf dem Vorderwandbereich 28 angebracht, wird vorwiegend der die erhabene Benutzerinformation 29 umgebende Teil des Vorderwandbereichs 28 durchscheinend sein. Wird die Benutzerinformation von einem Aufkleber gebildet, handelt es sich hierbei vorzugsweise um einen teildurchsichtigen Aufkleber, bei dem entweder nur die Benutzerinformation 29 mit dunkler Farbe aufgedruckt ist oder die Benutzerinformation 29 als solches durchsichtig ist. Dann erleuchtet entweder die Benutzerinformation 29 oder das Umfeld derselben.

Die visierartige Abdeckung 19 ist derart ausgebildet, dass sie in der Schließstellung (Fig. 4 und 5) die Vorderseite des Gehäuses 13, und zwar insbesondere alle Drehschalter 25, 26, 27, die Bedienflächen 23 und 24 und den Vorderwandbereich 28 verdeckt. Bei sich in der Öffnungsstellung (Fig. 1 bis 3) befindlicher Abdeckung 19 sind die Bedienflächen 23 und 24 und die diesen zugeordneten Drehschalter 25, 26 und 27 frei zugänglich, ebenso wie der Vorderwandbereich 28. Die Drehachse 20, womit die Abdeckung 19 schwenkbar am Gehäuse 13 angelenkt ist, befindet sich gezielt hinter den Drehschaltern 25, 26 und 27, und zwar etwas oberhalb der mittleren Drehschalter 26 (Fig. 3). Diese Anordnung der Drehachse 20 ist bewusst so getroffen, dass die Abdeckung 19 in der vollständig geöffneten Stellung (Fig. 3) verbleibt, ohne dass sie festgehalten oder arretiert werden muss. Dazu liegt der in der Fig. 3 symbolisch mit einem Kreuz dargestellte Schwerpunkt 30 bei in der Öffnungsstellung befindlicher Abdeckung 19 nicht direkt senkrecht über der Drehachse 20, sondern geringfügig dahinter. Damit der Schwerpunkt 30 diese Position erhält, ist die Abdeckung 19 entsprechend gestaltet. Vorzugsweise ist der Abdeckung 19 mindestens ein Ausgleichsgewicht zugeordnet, das den Schwerpunkt derselben an die gewünschte Stelle bringt. Durch einen nicht gezeigten Anschlag wird die Öffnungsstellung der Abdeckung 19, nämlich der maximale Schwenkweg in Öffnungsrichtung, begrenzt. Dadurch ist sichergestellt, dass der Schwerpunkt 30 der Abdeckung 19 nicht weiter hinter die Drehachse 20 gelangen kann, also erwünscht und in der Fig. 3 dargestellt.

Die gezielte Relativanordnung des Schwerpunkts 30 der Abdeckung 19 zur Drehachse 20 führt dazu, dass dann, wenn es die Bedienungsperson 12 vergessen haben sollten, die Abdeckung 19 vor Fahrtantritt zu schließen, die Abdeckung 19 durch Erschütterungen beim Anlassen oder Anfahren des Fahrzeugs automatisch schließt, nämlich zuschwenkt. Durch die besagten Erschütterungen des Fahrzeugs kommt es zu einem leichten anfänglichen Verschwenken der Abdeckung 19, wodurch der Schwerpunkt 30 über die Drehachse 20 hinweg nach vorn gelangt und danach schwerkraftbedingt die Abdeckung 19 zufällt und dadurch automatisch in die Schließstellung schwenkt.

Die Fig. 1 und 3 zeigen an der vorderen (rechten) Stirnkante der Abdeckung 19 eine Lasche 31 in der eine quergerichtete Durchgangsbohrung 32 sich befindet. Mit der Durchgangsbohrung 32 korrespondiert eine in der Fig. 2 andeutungsweise erkennbare Durchgangsbohrung 33. Bei sich in der Schließstellung befindlicher Abdeckung 19, also bei geschlossener Bedieneinrichtung 10, fluchten die Durchgangsbohrungen 32 und 33 in der Abdeckung 19 bzw. im Gehäuse 13, wodurch die Bedieneinrichtung 10 bei Nichtgebrauch verschließbar ist.

Es ist schließlich noch denkbar, mindestens einen Drehschalter 25, 26 oder 27 als Schlossschalter auszubilden. Ist nur ein Drehschalter 25, 26 oder 27 oder auch irgend ein anderes Bedienorgan als Schließschalter ausgebildet, wird durch eine entsprechende Schaltung erreicht, dass auch bei Betätigung der anderen Bedienorgane keine Funktion der Hubladebühne oder irgendwelcher Zusatzaggregate erfolgt, also die gesamte Bedieneinrichtung 10 gesperrt ist.

Mindestens das Gehäuse 13 und die Abdeckung 19 der Bedieneinrichtung 10 sind aus Kunststoff, vorzugsweise thermoplastischem Kunststoff, gebildet. Aus dem gleichen Material können auch Teile der Drehschalter 25, 26 und 27 gebildet sein.

### Bezugszeichenliste:

- 10: Bedieneinrichtung
- 11: Bedienseite
- 12: Bedienungsperson
- 13: Gehäuse
- 14: Rückseite
- 15: Unterseite
- 16: Stirnseite
- 17: Vorderseite
- 18: Schraubsockel
- 19: Abdeckung
- 20: Drehachse
- 21: Mantelfläche
- 22: Stirnfläche
- 23: Bedienfläche
- 24: Bedienfläche
- 25: Drehschalter
- 26: Drehschalter
- 27: Drehschalter
- 28: Vorderwandbereich
- 29: Benutzerinformation
- 30: Schwerpunkt
- 31: Lasche
- 32: Durchgangsbohrung
- 33: Durchgangsbohrung

## Patentansprüche

1. Bedieneinrichtung für eine Hubladebühne an einem Fahrzeug, die eine Ladeplattform und ein Hubwerk aufweist, wobei das Hubwerk die Ladeplattform mit einem Fahrgestell des Fahrzeugs verbindet, mit Bedienorganen, einem kastenartigen Gehäuse (13), das die Bedienorgane trägt und mit vorzugsweise einer Abdeckung (19) für mindestens die Bedienorgane, wobei das Gehäuse (13) an gegenüberliegenden Stirnseiten mehrere räumlich voneinander getrennte Bedienfelder mit Bedienorganen aufweist, und die Bedieneinrichtung von einer Bedienperson mit beiden Händen zu betätigen ist, wobei ein Bedienorgan jedes Bedienfeldes von einer Hand zu betätigen ist, **dadurch gekennzeichnet, dass** die Bedienfelder derart unterschiedlich gerichtet sind, dass sie antiparallel zueinander verlaufen und gegensinnig leicht geneigt sind, indem sie in Richtung zur Bedienungsperson konvergieren.

2. Bedieneinrichtung nach Anspruch 1, **dadurch gekennzeichnet, dass** das kastenartige Gehäuse (13) mindestens einen Hohlraum zur Aufnahme elektrischer Anschlüsse, Anschlussleitungen und/oder mindestens Teile der Bedienorgane aufweist.

3. Bedieneinrichtung Anspruch 1 oder 2, **dadurch gekennzeichnet, dass** gleiche Bedienfelder an den gegenüberliegenden Stirnseiten (16) des Gehäuses (13) angeordnet sind.

4. Bedieneinrichtung nach einem der vorhergehenden Ansprüche, **dadurch gekennzeichnet, dass** die Bedienfelder in Bezug auf die Längsrichtung des Fahrzeugs vom und hinten liegenden Stirnseiten (16) des Gehäuses (13) zugeordnet sind.

5. Bedieneinrichtung nach einem der vorhergehenden Ansprüche, **dadurch gekennzeichnet, dass** für die jeweilige Funktion der Hubladebühne jeweils zwei vorzugsweise gleiche Bedienorgane vorgesehen sind, die auf die unterschiedlichen Bedienfelder verteilt sind.

6. Bedieneinrichtung nach einem der vorhergehenden Ansprüche, **dadurch gekennzeichnet, dass** mindestens einige Bedienorgane und/oder Bedienfelder beleuchtbar sind.

7. Bedieneinrichtung nach Anspruch 6, **dadurch gekennzeichnet, dass** die Bedienorgane indirekt beleuchtet sind, vorzugsweise durch eine Hintergrundbeleuchtung mindestens eines Teils jedes Bedienfelds.

8. Bedieneinrichtung nach Anspruch 6 oder 7, **dadurch gekennzeichnet, dass** im Inneren des Gehäuses (13) Leuchtmittel angeordnet sind, die die innere Rückseite der Bedienfelder mindestens teilweise beleuchten und wenigstens die beleuchteten Teile der Bedienfelder durchscheinend ausgebildet sind.

9. Bedieneinrichtung nach einem der vorhergehenden Ansprüche, **dadurch gekennzeichnet, dass** das Gehäuse (13) zwischen den Bedienfeldern mindestens einen zur Bedienungsperson (12) gerichteten Vorderwandbereich (28) aufweist, der mindestens teilweise beleuchtbar ist.

10. Bedieneinrichtung nach Anspruch 9, **dadurch gekennzeichnet, dass** mindestens ein Teil des Vorderwandbereichs (28) vom Inneren des Gehäuses (13) her beleuchtbar und mindestens ein Teil des Vorderwandbereichs (28) durchscheinend ausgebildet ist.

11. Bedieneinrichtung nach Anspruch 9, **dadurch gekennzeichnet, dass** dem Vorderwandbereich (28) zwischen den Bedienfeldern, insbesondere dem beleuchtbaren Teil des Vorderwandbereichs (28), mindestens eine Benutzerinformation (29) zugeordnet ist.

12. Bedieneinrichtung nach einem der vorhergehenden Ansprüche, **dadurch gekennzeichnet, dass** jedes Bedienfeld als eine Bedienfläche (23, 24) ausgebildet ist und die Bedienflächen (23, 24) sich in unterschiedlichen Ebenen befinden, indem sie die unter einem Winkel von 130° bis 175° antiparallel zueinander verlaufen:

13. Bedieneinrichtung nach einem der vorhergehenden Ansprüche, **dadurch gekennzeichnet, dass** die Abdeckung (19) visierartig verschwenkbar ist, von einer Schließstellung, in der die Bedienflächen (23, 24) mit den Bedienorganen von der Abdeckung (19) überdeckt sind in eine Öffnungsstellung, in der die Abdeckung (19) mindestens die Bedienflächen (23, 24) mit den Bedienorganen freigibt.

14. Bedieneinrichtung nach Anspruch 13, **dadurch gekennzeichnet, dass** die Abdeckung (19) um eine Drehachse (20) verschwenkbar ist und sich die Drehachse (20) parallel zur Längsachse des Fahrzeugs erstreckt, indem bei geöffneter Abdeckung (19) ein Schwerpunkt (30) derselben derart relativ zur Drehachse (20) angeordnet ist, dass bei geringem Verschwenken der Abdeckung (19) in die Schließstellung die Abdeckung (19) im Übrigen selbsttätig in die Schließstellung gelangt.

## Claims

1. Control device for a tailgate lift on a vehicle, said tailgate lift having a loading platform and a lifting mechanism, the lifting mechanism connecting the loading platform to a chassis of the vehicle, with control elements, a box-like housing (13) bearing the control elements and with preferably one cover (19) for at least the control elements, the housing (13) having a plurality of physically separated control panels with control elements on opposite end sides, and the control device being intended for actuation by an operator using both hands, with one control element of each control panel being intended for actuation using one hand, **characterized in that** the control panels are directed in different directions in such a way that they run back-to-back in parallel with one another and are slightly inclined in opposite directions by virtue of them converging in the direction towards the operator.

2. Control device according to Claim 1, **characterized in that** the box-like housing (13) has at least one cavity for receiving electrical connections, connecting lines and/or at least parts of the control elements.

3. Control device according to Claim 1 or 2, **characterized in that** identical control panels are arranged on the opposite end sides (16) of the housing (13).

4. Control device according to one of the preceding claims, **characterized in that** the control panels are associated with front and rear end sides (16) of the housing (13) in relation to the longitudinal direction of the vehicle.

5. Control device according to one of the preceding claims, **characterized in that** in each case two preferably identical control elements are provided for the respective function of the tailgate lift and are distributed among the different control panels.

6. Control device according to one of the preceding claims, **characterized in that** at least a few control elements and/or control panels are capable of being illuminated.

7. Control device according to Claim 6, **characterized in that** the control elements are illuminated indirectly, preferably by at least part of each control panel being backlit.

8. Control device according to Claim 6 or 7, **characterized in that** light-emitting means are arranged in the interior of the housing (13) and at least partially illuminate the inner rear side of the control panels, and at least the illuminated parts of the control panels are designed to be transparent.

9. Control device according to one of the preceding claims, **characterized in that** the housing (13) has at least one front wall region (28), which is directed towards the operator (12) and can be at least partially illuminated, between the control panels.

10. Control device according to Claim 9, **characterized in that** at least part of the front wall region (28) is designed to be capable of being illuminated from the interior of the housing (13) and at least part of the front wall region (28) is designed to be transparent.

11. Control device according to Claim 9, **characterized in that** at least one item of user information (29) is associated with the front wall region (28) between the control panels in particular with that part of the front wall region (28) which can be illuminated.

12. Control device according to one of the preceding claims, **characterized in that** each control panel is in the form of a control area (23, 24), and the control areas (23, 24) are located in different planes by virtue of them running back-to-back in parallel with one another at an angle from 130° to 175°.

13. Control device according to one of the preceding claims, **characterized in that** the cover (19) is capable of being pivoted in the manner of a visor from a closed position, in which the control areas (23, 24) with the control elements are covered by the cover (19) into an open position, in which the cover (19) exposes at least the control areas (23, 24) with the control elements.

14. Control device according to Claim 13, **characterized in that** the cover (19) is capable of being pivoted about an axis of rotation (20), and the axis of rotation (20) extends parallel to the longitudinal axis of the vehicle by virtue of the fact that, when the cover (19) is open, a centre of gravity (30) thereof is arranged relative to the axis of rotation (20) in such a way that, in the event of a slight pivoting of the cover (19) into the closed position, the cover (19) automatically moves entirely into the closed position.

## Revendications

1. Dispositif de commande pour un hayon élévateur d'un véhicule, qui présente une plate-forme de chargement et un système de levage, le système de levage reliant la plate-forme de chargement à un mécanisme de roulement, du véhicule, avec des organes de commande, un boîtier de type caisse (13), qui porte les organes de commande, et avec de préférence un recouvrement (19) au moins pour les organes de commande, le boîtier (13) présentant, sur des côtés frontaux opposés, plusieurs champs de commande séparés les uns des autres spatialement avec des organes de commande, et le dispositif de commande pouvant être actionné des deux mains par un opérateur, un organe de commande de chaque champ de commande pouvant être actionné d'une main, **caractérisé en ce que** les champs de commande sont orientés différemment, de telle sorte qu'ils s'étendent l'un par rapport à l'autre de manière antiparallèle et qu'ils soient légèrement inclinés en sens opposé, de manière à converger dans la direction d'un opérateur.

2. Dispositif de commande selon la revendication 1, **caractérisé en ce que** le boîtier de type caisse (13) présente au moins une cavité pour recevoir des raccords électriques, des conduites de raccordement et/ou au moins des parties des organes de commande.

3. Dispositif de commande selon la revendication 1 ou 2, **caractérisé en ce que** les mêmes champs de commande sont disposés sur les côtés frontaux opposés (16) du boîtier (13).

4. Dispositif de commande selon l'une quelconque des revendications précédentes, **caractérisé en ce que** les champs de commande sont associés à des côtés frontaux (16) du boîtier (13) situés par rapport à la direction longitudinale du véhicule, à l'avant et à l'arrière.

5. Dispositif de commande selon l'une quelconque des revendications précédentes, **caractérisé en ce que** pour le fonctionnement respectif du hayon élévateur, on prévoit à chaque fois deux organes de commande de préférence identiques, qui sont répartis sur les champs de commande différents.

6. Dispositif de commande selon l'une quelconque des revendications précédentes, **caractérisé en ce qu'**au moins certains organes de commande et/ou champs de commande sont éclairables.

7. Dispositif de commande selon la revendication 6, **caractérisé en ce que** les organes de commande sont éclairés de manière indirecte, de préférence par un rétro-éclairage d'au moins une partie de chaque champ de commande.

8. Dispositif de commandé selon la revendication 6 ou 7, **caractérisé en ce que** des moyens d'éclairage sont disposés à l'intérieur du boîtier (13), lesquels éclairent le côté arrière interne des champs de commande au moins en partie et **en ce qu'**au moins les parties éclairées des champs de commande sont réalisées de manière transparente.

9. Dispositif de commande selon l'une quelconque des revendications précédentes, **caractérisé en ce que** le boîtier (13) présente entre les champs de commande au moins une région de paroi avant (28) orientée vers l'opérateur (12), qui peut être au moins partiellement éclairée.

10. Dispositif de commande selon la revendication 9, **caractérisé en ce qu'**au moins une partie de la région de paroi avant (28) peut être éclairée depuis l'intérieur du boîtier (13) et au moins une partie de la région de paroi avant (28) est réalisée de manière transparente.

11. Dispositif de commande selon la revendication 9, **caractérisé en ce que** l'on associe à la région de paroi avant (28) entre les champs de commande, notamment la partie éclairable de la région de paroi avant (28), au moins une information pour l'utilisateur (29).

12. Dispositif de commande selon l'une quelconque des revendications précédentes, **caractérisé en ce que** chaque champ de commande est réalisé sous forme de surface de commande (23, 24) et les surfaces de commande (23, 24) se trouvent dans des plans différents, et s'étendent ainsi de manière antiparallèle l'une par rapport à l'autre suivant un angle de 130° à 175°.

13. Dispositif de commande selon l'une quelconque des revendications précédentes, **caractérisé en ce que** le recouvrement (19) peut pivoter comme une visière, depuis une position de fermeture dans laquelle les surfaces de commande (23, 24) avec les organes de commande sont recouvertes par le recouvrement (19), dans une position d'ouverture dans laquelle le recouvrement (19) libère au moins les surfaces de commande (23, 24) avec les organes de commande.

14. Dispositif de commande selon la revendication 13, **caractérisé en ce que** le recouvrement (19) peut pivoter autour d'un axe de rotation (20) et l'axe de rotation (20) s'étend parallèlement à l'axe longitudinal du véhicule, et lorsque le recouvrement (19) est ouvert, un centre de gravité (30) de celui-ci étant ainsi disposé par rapport à l'axe de rotation (20) de telle sorte que lors d'un faible pivotement du recouvrement (19) dans la position de fermeture, le recouvrement (19) parvienne du reste automatiquement dans la position de fermeture.
